# EUROPÄISCHE PATENTANMELDUNG

(11) **EP 4 678 056 A1**
(43) Veröffentlichungstag der Anmeldung: **14.01.2026**
(21) Anmeldenummer: 25187637.1
(22) Anmeldetag: 04.07.2025
(51) Int. Cl.: A44B 18/00, H04W 4/80

(54) **ZUSTANDSERFASSUNG EINER HAFTVERBINDUNG**

(30) Priorität: 12.07.2024 DE 102024119934
(71) Anmelder: Gottlieb Binder GmbH & Co. KG, 71088 Holzgerlingen (DE)
(72) Erfinder: HEEPE, Lars, 72072 Tübingen (DE); DROTLEF, Dirk-Michael, 75233 Tiefenbronn (DE)
(74) Vertreter: Kohler Schmid Möbus Patentanwälte

(57) **Zusammenfassung**

Die Erfindung betrifft ein Verfahren (100) zur Zustandsbestimmung eines Verbindungssystems (10), aufweisend ein erstes Haftmittel (12), ein zweites Haftmittel (14) und eine Sensoranordnung (16). Das Verfahren (100) kann insbesondere zur Bestimmung einer Position der Haftmittel (12, 14) relativ zueinander verwendet werden, wobei das erste Haftmittel (12) an das zweite Haftmittel (14) angenähert und/oder angebracht wird und zumindest ein Parameter betreffend die Positionierung durch die Sensoranordnung (16) erfasst wird. Nach der Ausrichtung der Haftmittel (12, 14) kann ein endgültiges Anbringen (ggf. Wiederanbringen) erfolgen. Das Verfahren (100) kann gleichermaßen insbesondere zur Erfassung der Anhaftung des ersten Haftmittels (12) an dem zweiten Haftmittel (14) und/oder zur Bestimmung der Belastung bzw. der Nicht-Belastung einer Haftverbindung verwendet werden. Bei einer bevorzugten Weiterbildung des Verfahrens (100) können verarbeitete und/oder unverarbeitete Sensordaten mittels einer Kommunikationskomponente (18) drahtlos versendet werden. Die Erfindung betrifft weiterhin ein Verbindungssystem (10), welches zur Durchführung des vorgenannten Verfahrens (100) (ggf. inklusive der Weiterbildungen dieses Verfahrens (100)) eingerichtet ist und ein Set (1), aufweisend das Verbindungssystem (10) und ein Funktionselement, insbesondere einen Mobilfunkrouter (11). Die Erfindung betrifft auch ein Verfahren (200) zur Herstellung des vorgenannten Verbindungssystems (10).

## Beschreibung

### Hintergrund der Erfindung

Die Erfindung betrifft ein Verfahren zur Zustandserfassung eines Verbindungssystems. Die Erfindung betrifft weiterhin ein Verbindungssystem, welches zur Durchführung des vorgenannten Verfahrens eingerichtet ist und ein Set, aufweisend das Verbindungssystem und ein Funktionselement, insbesondere einen Mobilfunkrouter. Die Erfindung betrifft auch ein Verfahren zur Herstellung des vorgenannten Verbindungssystems und einer Weiterbildung des vorgenannten Verbindungssystems, bei der das Verbindungssystem eine Kommunikationskomponente aufweist.

Es ist bekannt, Verbindungssysteme, insbesondere manuell wiederlösbare Verbindungssysteme, mit Sensoren und Einrichtungen zur Weiterverarbeitung und/oder Übertragung von Sensordaten zu kombinieren.

CN 114 608 623 A beschreibt eine flexible zweidimensionale Sensoranordnung, wobei ein Klettverschluss zum Einsatz kommt, bei dem an der Rückseite eines jeweiligen Haftelements eine elektrisch leitende Struktur angeordnet ist, während an der Rückseite des jeweilig gegenüberliegenden Haftelements ein Sensor angebracht ist. Die Verbindung des Sensors zu der elektrisch leitenden Struktur erfolgt über eine jeweilige lokale Durchführung von Leiterelementen von der Rückseite zur Haftseite des Klettverschlusses. Beim Herstellen der Haftverbindung können die Leiterelemente so miteinander in Kontakt kommen.

DE 10 2018 104 774 B3 beschreibt eine auf der Haut tragbare Elektrode, welche als Sensor eingesetzt werden kann. Die Hautkontaktschicht der Elektrode ist an einem Teil eines Klettverschlusses angeordnet und kann darüber flexibel auf einem, den zweiten Teil des Klettverschlusses bildenden, Trägerfeld positioniert werden. Eine Durchführung eines elektrischen Potentials durch die Klettverbindung wird über eine elektrische Leitfähigkeit der Klettverschlussteile, vorzugsweise mithilfe einer Silberbeschichtung, gewährleistet.

US 5 714 706 A offenbart eine Schuheinlage, die als Eingabefeld zur Kontrolle von Tönen genutzt werden kann. Ein piezoelektrischer Sensor wird dabei mithilfe eines Klettverschlusses auf einer Substratplatte angeordnet.

DE 10 2010 060 222 B4 beschreibt eine Textilware mit einer elektrischen oder elektronischen Komponente, u.a. beispielsweise einem Sensor. Der Textilware sind Kontaktmittel, aufweisend einen Klettverschluss, zugeordnet. Verschlussteile des Klettverschlusses weisen jeweils elektrisch leitende Kontaktelemente auf, über die eine elektrisch leitende Verbindung über den Klettverschluss hinweg hergestellt werden kann.

CN 105 640 542 B, CN 218 501 232 U und CN 109 350 015 A beschreiben jeweils die Anordnung von Sensoren für medizinische Anwendungen. Es werden dabei jeweils Klettverschlüsse zur Anbindung der Sensoren an ein Trägermaterial bzw. zur Befestigung eines Sensorträgers an einem Patienten verwendet.

US 2020/0338750 A1 beschreibt ein mikrostrukturiertes Haftmittel, wobei eine Elektrode und/oder ein piezoelektrisches Element als Bestandteile des Haftmittels betrachtet werden kann/können. Das piezoelektrische Element kann dabei unter anderem als Kraft- und Berührungssensor fungieren.

WO 03/085273 A1 beschreibt einen durch elektrische Anregung lösbaren Klettverschluss. Teile der Haken eines Verschlussteils bestehen dabei aus elektrisch ansprechbarem Formgedächtnismaterial, wobei die jeweiligen Haken ein weiteres elektrisch ,inertes' Material aufweisen. Wird ein elektrischer Strom durch die Haken geleitet, werden diese dadurch begradigt und die Klettverbindung wird gelöst. Der Klettverschluss, oder zumindest Teile von diesem, müssen dazu eine entsprechende elektrische Leitfähigkeit aufweisen.

DE 20 2021 002 148 U1 beschreibt ein textiles Anschlagmittel, welches eine Informationsvorrichtung aufweist, wobei die Informationsvorrichtung einseitig reversibel an dem Anschlagmittel festlegbar ist. Dies kann beispielsweise über einen Klettverschluss erfolgen. In einer Ausführungsvariante weist die Informationsvorrichtung einen oder mehrere RFID-Transponder (Radio-Frequency IDentification) auf.

CN 212 433 805 U und CN 209 560 579 U beschreiben jeweils die Fixierung eines RFID-Transponders mithilfe eines Klettverschlusses.

US 2012/0123291 A1 beschreibt eine Messapparatur zur Bestimmung von Bio-Impedanz. Dazu sind mehrere Sonden auf einem flexiblen Band angeordnet. Zusätzlich befindet sich am Band eine Einrichtung zur drahtlosen Übertragung der Impedanzdaten. Die Fixierung des Bandes am Körper erfolgt in Ausführungsvarianten mithilfe eines Klettverschlusses.

US 10 265 019 B2 beschreibt in ähnlicher Weise eine Sensoranordnung, wobei Sensoren zur Überwachung von physiologischen Parametern auf einem flexiblen Stirnband (oder einer ähnlichen Kopfbekleidung) angeordnet sind, welches beispielsweise unter Verwendung eines Klettverschlusses am Körper fixiert werden kann. Die Sensordatenübertragung kann wiederum über ein an dem Stirnband angeordnetem Drahtlosdatenübertragungsmodul erfolgen.

US 11 039 530 B2 beschreibt eine Kommunikationseinrichtung, die an einem Gefüge angeordnet ist und die an einem Bekleidungsstück angebracht werden kann, um so ein ,verbundenes Bekleidungssystem' zu schaffen. Die Kommunikationseinrichtung kann dabei u.a. einen NFC-Sensor (Near Field Communication) aufweisen und mithilfe eines Klettverschlusses an dem Bekleidungsstück befestigt werden. Der Controller der Kommunikationseinrichtung kann in einer über einen Klettverschluss verschließbaren Einhausung untergebracht werden.

Im Stand der Technik werden mit den Sensoren Parameter gemessen, die nicht ein Verbindungssystem selbst charakterisieren.

### Aufgabe der Erfindung

Es ist demgegenüber Aufgabe der Erfindung, die Feststellung eines Zustands eines Verbindungssystems, insbesondere eines Verbindungssystems zur Herstellung wiederlösbarer Verbindungen, zu ermöglichen.

### Beschreibung der Erfindung

Diese Aufgabe wird erfindungsgemäß gelöst durch ein Verfahren zur Zustandserfassung gemäß Patentanspruch 1, ein Verbindungssystem gemäß Patentanspruch 8, ein Set gemäß Patentanspruch 15 und ein Verfahren zur Herstellung eines Verbindungssystems gemäß Patentanspruch 16. Die abhängigen Patentansprüche geben bevorzugte Ausgestaltungen wieder.

Das Verfahren umfasst das Annähern und/oder Anbringen eines ersten Haftmittels an ein zweites Haftmittel sowie das Erfassen zumindest eines Parameters bezüglich eines Zustands einer zwischen dem ersten und dem zweiten Haftmittel ausgebildeten oder auszubildenden Haftverbindung durch eine Sensoranordnung. Das zweite Haftmittel kann ggf. in Form einer Oberfläche vorliegen. Falls das erste Haftmittel initial nur an das zweite Haftmittel angenähert wird, erfolgt das endgültige Anbringen nach der Erfassung des zumindest einen Parameters, wobei im Anschluss bei einem weiteren Durchlaufen des Verfahrens zumindest ein weiterer Parameter erfasst werden kann.

Unter einem Zustand der Haftverbindung kann eine bestehende oder nicht bestehende Haftverbindung verstanden werden. Hierfür kann der Parameter eine Information darüber bereitstellen, ob die Haftmittel eine Haftverbindung eingegangen sind oder nicht eingegangen sind. Beispielsweise kann vorgesehen sein, dass ein vorbestimmter Minimalabstand zwischen den Haftmitteln vorliegt. Weiter beispielsweise kann für das Vorliegen einer Haftverbindung vorgesehen sein, dass ein Drucksensor einen Mindestanpressdruck ermittelt. Dies kann ein kontrolliertes Annähern und/oder Anbringen der Haftmittel aneinander sicherstellen.

Alternativ oder zusätzlich kann der Parameter eine Information darüber bereitstellen, ob sich eine Haftverbindung durch die Haftmittel anbahnt. Mit anderen Worten, ob die Haftmittel zum Ausbilden einer vorbestimmten Haftverbindung zueinander ordnungsgemäß positioniert und/oder ausgerichtet sind.

Unter einem Zustand der Haftverbindung kann alternativ oder zusätzlich eine Stärke der eingegangenen Haftverbindung verstanden werden. Hierdurch kann eine ausreichende Stärke der Haftverbindung bewirkt und/oder eine Verringerung der Stärke der Haftverbindung frühzeitig erkannt werden. Beispielsweise kann der Wert des Parameters mit bekannten Referenzwerten, deren Auswirkung auf die Stärke der Haftverbindung bekannt ist, verglichen werden. Beispielsweise kann ein Anpressdruck zwischen den Haftmitteln zur Bewertung der Stärke der Haftverbindung verwendet werden.

Insbesondere erfolgt das Annähern und/oder Anbringen des ersten Haftmittels an dem zweiten Haftmittel in Abhängigkeit, insbesondere unter Verwendung, des zumindest einen erfassten Parameters betreffend den Zustand der Haftverbindung.

Das Verfahren kann ein Auswerten des mindestens einen Parameters vorsehen. Insbesondere erfolgt ein Vergleichen des Parameters mit hinterlegten Referenzgrößen und/oder Nachschlagetabellen und/oder ein Berechnen von Referenzgrößen in Abhängigkeit des Parameters, wobei die Referenzgrößen eine, vorzugsweise eindeutige, Zuordnung des Parameterwerts zu bekannten Zuständen des Haftverschlusses ermöglichen. Hierdurch kann der Zustand der Haftverbindung in Abhängigkeit des Parametes besonders zuverlässig bestimmt werden.

Besonders bevorzugt wird mit dem mindestens einen Parameter der Zustand der Haftverbindung unmittelbar zwischen den Haftmitteln bestimmt. Mit anderen Worten wird eine Verbindung der Haftmittel aufgrund von inneren und/oder äußeren Einflüssen auf den Haftverschluss bestimmt. Hierdurch kann unabhängig von der Verwendung des Haftverschlusses eine Aussage über die Belastung und/oder die Belastbarkeit des Haftverschlusses bzw. der Haftverbindung ausgegeben werden. Beispielsweise kann über eine äußere Zugbelastung auf den Haftverschluss und eine flächenspezifische Haltekraft der Haftmittel eine Aussage über die zulässige Belastung des Haftverschlusses bzw. der Haftverbindung ausgegeben werden.

Das Auswerten kann insbesondere ein Bestimmen einer physikalischen Zustandsgröße aus dem mindestens einen Parameter vorsehen. Mit anderen Worten kann von dem ermittelten Parameter auf Zustandsgrößen des Haftverschlusses geschlossen werden. Insbesondere kann aus einer relativen Position der Haftmittel zueinander ein Haftmittelkontakt und/oder ein Anpressdruck der Haftmittel bestimmt werden. Beispielsweise kann bei aneinander angebrachten Haftmitteln ein relativ geringer Abstand zwischen den Haftmitteln auf eine starke Haftverbindung hinweisen. Ein mittlerer Abstand kann auf eine reduzierte Haftverbindung hindeuten und ein großer Abstand kann auf eine erreichte Belastungsgrenze der Haftverbindung hinweisen. Typischerweise werden relative Positionen der Haftmittel durch Positionsbestimmung zwischen festgelegten Referenzpositionen an den Haftmitteln ermittelt. Hierdurch können Verformungen, insbesondere Schwellungen und/oder Stauchungen, der Haftmittel berücksichtigt werden.

Bevorzugt kann das Verfahren eine Ausgabe des mindestens einen Parameters, des Werts des Parameters, weiterer ermittelter physikalischer Größen und/oder des Zustands der Haftverbindung vorsehen. Die Ausgabe kann visuell erfolgen. Die Ausgabe kann zur weiteren Verarbeitung an ein elektronisches Überwachungssystem erfolgen. Hierdurch kann eine Überwachung der Haftverbindung besonders zuverlässig erfolgen.

Das Verfahren wird typischerweise computergestützt durchgeführt. Mit anderen Worten erfolgt die Durchführung des Verfahrens unter Verwendung von mindestens einem Computer. Besonders bevorzugt wird das Verfahren automatisiert durchgeführt.

Die Verfahrensschritte des Verfahrens können, insbesondere mehrmals, wiederholt werden. Insbesondere können die Haftmittel dabei wieder voneinander gelöst werden, falls die Haftverbindung nicht erwartungsgemäß ausgebildet ist. Hierdurch kann das Annähern und/oder Anbringen der Haftmittel aneinander iterativ durchgeführt und eine auszubildende Haftverbindung sichergestellt werden.

Vorzugsweise wird mittels eines Sensorelements der Sensoranordnung eine der folgenden physikalischen Größen zwischen dem ersten und dem zweiten Haftmittel erfasst: Verschiebung, Dehnung, Kraft, Druck, Strahlungsenergie, eine Stoffmengenkonzentration, oder eine Magnetfeldstärke.

Die Sensoranordnung umfasst typischerweise mindestens einen technischen Sensor zum Erfassen des den Zustand der Haftverbindung betreffenden Parameters.

Bei einer besonders bevorzugten Variante des Verfahrens ist das Sensorelement ein optisches Sensorelement, ein Magnetsensor, ein Drucksensor, ein Kraftsensor oder ein Dehnungssensor.

Sensorelemente aus der Gruppe der optischen Sensorelemente können beispielsweise Sensoren sein, welche die Strahlungsenergie der Umgebungsbeleuchtung erfassen, oder Sensoren, welche die Erfassung der Reflexion eines zuvor ausgesandten Lichtstrahls ausnutzen. Aus der Gruppe der Magnetsensoren eignen sich insbesondere Hall-Sensoren und Reed-Schalter. Als Drucksensoren eignen sich bevorzugt bidirektional-differenzielle Elemente. Als Beispiele für Kraftsensoren und Dehnungssensoren seien an dieser Stelle mechanische, kapazitive, induktive und piezoelektrische Sensorelemente genannt. Grundsätzlich können jegliche Sensorelemente herangezogen werden, welche sich zur Erfassung des zumindest einen Parameters eignen. Dabei sind die aufgeführten Beispiele zur Funktionsweise der Sensorelemente nicht als abschließende Aufzählung zu verstehen. Insbesondere ist denkbar, das Sensorelemente mehreren Kategorien zugeordnet werden können (wie beispielsweise faseroptische Dehnungssensoren).

Der zumindest eine Parameter kann eine Aussage über die absolute Position des ersten Haftmittels ermöglichen. Alternativ oder zusätzlich dazu ermöglicht der zumindest eine Parameter eine Aussage über die Position des ersten Haftmittels in Relation zum zweiten Haftmittel. Diesbezüglich kann es vorteilhaft sein, die Haftmittel zunächst nur aneinander anzunähern und diese in einem späteren Verfahrensschritt miteinander zu verbinden. Ebenso ist denkbar, dass das erste Haftmittel zur Bestimmung der Positionierung im Rahmen eines iterativen Prozesses, bei dem das Verfahren mehrmals durchlaufen wird, jeweils mehrmals angebracht und ggf. wieder gelöst wird, bis schließlich ein endgültiges Anbringen in gewünschter Position erfolgt.

Der zumindest eine Parameter kann weiterhin den Zustand der Anhaftung des ersten Haftmittels am zweiten Haftmittel, zumindest in einem Bereich eines Verbindungssystems, abbilden. In diesem Fall kann die Haftverbindung insbesondere bereits im ersten Verfahrensschritt hergestellt werden.

Alternativ oder zusätzlich dazu kann der zumindest eine Parameter eine Aussage über die Belastung der Haftverbindung ermöglichen. Beispielsweise kann eine bei der Herstellung der Verbindung anzulegende Vorlast erfasst und überprüft werden. Weiterhin kann überprüft werden, ob die Belastung der Haftverbindung auch nach einer gewissen Zeitspanne noch innerhalb eines zu erwartenden Bereiches liegt. Die Erfassung der Belastung der Haftverbindung schließt die Erfassung einer Nicht-Belastung mit ein. Die Nicht-Belastung kann insbesondere auftreten, wenn das System geöffnet ist, d.h. die Haftverbindung nicht hergestellt ist. Dies wird im vorliegenden Zusammenhang ebenfalls als Aussage zur Belastung der Haftverbindung verstanden.

Wahlweise können bei der Durchführung des erfindungsgemäßen Verfahrens mehrere Parameter bezüglich verschiedener Eigenschaften des Zustands des Verbindungssystems und/oder verschiedener lokaler Bereiche des Verbindungssystems erfasst werden.

Weiter bevorzugt weist die Sensoranordnung mehrere gleichartige oder unterschiedliche Sensorelemente zur Erfassung des zumindest einen Parameters auf.

Durch die Anordnung mehrerer Sensorelemente kann eine Sensormatrix ausgebildet werden, mithilfe derer eine einfache Positionsbestimmung ermöglicht werden kann. Weiterhin können über den Vergleich von Daten verschiedener - vorzugsweise gleichartiger - Sensorelemente Informationen gewonnen werden.

Bei einer Ausführungsvariante des Verfahrens werden die Daten oder ein Teil der Daten der Sensoranordnung vorzugsweise zumindest zeitweise in einer Speichereinrichtung des Verbindungssystems gespeichert. Bei Verwendung einer Speichereinrichtung entfällt die Notwendigkeit einer Handhabung der Daten in Echtzeit (beispielsweise bei einer Datenübertragung oder Datenverarbeitung).

Bei einer weiteren Ausführungsvariante kommt eine Datenverarbeitungseinrichtung des Verbindungssystems zum Einsatz, mithilfe derer die Daten der Sensoreinrichtung verarbeitet werden. Vorzugsweise können dadurch Daten verschiedener Sensorelemente miteinander kombiniert und/oder gegeneinander abgeglichen werden, um den zumindest einen Parameter abzuleiten.

Eine besonders bevorzugte Weiterbildung des erfindungsgemäßen Verfahrens sieht ein drahtloses Versenden der durch die Sensoranordnung erfassten Daten mittels einer Kommunikationskomponente des Verbindungssystems vor. Die Daten können dabei vor dem Versenden verarbeitet werden und/oder als Rohdaten versendet werden.

Insbesondere eignet sich als Kommunikationskomponente ein passives Element, welches keine eigene Energieversorgung aufweist. Das drahtlose Versenden kann in diesem Fall insbesondere mittels eines Lesegerätes erfolgen, welches unter Erzeugung eines magnetischen oder elektromagnetischen Feldes die notwendige Energieversorgung bereitstellt.

Die Aufgabe wird auch gelöst durch ein Verbindungssystem, aufweisend ein erstes Haftmittel, ein zweites Haftmittel, eine Sensoranordnung sowie eine Steuerung, wobei das Verbindungssystem zur Durchführung des erfindungsgemäßen Verfahrens eingerichtet ist. Die Sensoranordnung kann dabei insbesondere einen oder mehrere Sensoren aufweisen, welche(r) in oder auf einer Sensorfolie (Trägerfolie) angeordnet oder ausgebildet ist/sind.

Um die Möglichkeit der Ausführung des Verfahrens in verschiedenen Weiterbildungen zu gewährleisten, weist das Verbindungssystem vorzugsweise eine Speichereinrichtung und/oder eine Datenverarbeitungseinrichtung auf. Insbesondere kann es vorteilhaft sein, wenn das Verbindungssystem mehrere Speichereinrichtungen und/oder Datenverarbeitungseinrichtungen aufweist.

Besonders bevorzugt ist die Sensoranordnung an oder in dem ersten und/oder an oder in dem zweiten Haftmittel angeordnet oder ausgebildet. Insbesondere werden Ausführungen bevorzugt, bei denen ein oder mehrere Sensorelement(e) integraler Bestandteil der Struktur der Haftmittel oder eines der Haftmittel ist/sind.

Vorzugsweise handelt es sich bei den Haftmitteln um zwei korrespondierende Hälften eines Haftverschlusses in Form eines Klett- oder Clipsverschlusses, wobei eines der Haftmittel vorzugsweise Haken, Pilzköpfe oder palmenförmige Haftelemente aufweist, während das andere Haftmittel bevorzugt ein Flauschband, ein Veloursband, ein Gewebe, einen Vliesstoff und/oder ebenfalls Haken, Pilzköpfe oder palmenförmige Haftelemente aufweist. Das Flauschband, Veloursband, Gewebe, bzw. der Vliesstoff weisen dabei insbesondere Schlaufen und/oder Fasern zum Eingehen einer Wirkverbindung mit korrespondierenden Haftelementen auf.

Gleichermaßen ist denkbar, dass die beiden Haftmittel zwei zum Zusammenwirken geeignete Hälften eines Druckknopfes aufweisen. Ebenso können die Haftmittel jeweils mehrere solcher Hälften aufweisen.

Bei einer alternativen Ausführung weist eines der Haftmittel Mikrostrukturen zur Nutzbarmachung intermolekularer Kräfte auf. Vorzugsweise handelt es sich bei den Mikrostrukturen um von einem Trägermaterial vorstehende Vorsprünge, wobei die Vorsprünge bevorzugt eine Höhe von 20 µm bis 800 µm, besonders bevorzugt 40 µm bis 70 µm, ganz besonders bevorzugt von 50 µm bis 60 µm, aufweisen. Die Vorsprünge weisen als Material insbesondere ein Elastomer auf. Die Flächendichte der Vorsprünge liegt dabei bevorzugt in einem Bereich von 10.000 Vorsprüngen pro cm² bis 100.000 Vorsprüngen pro cm², besonders bevorzugt im Bereich von 15.000 Vorsprüngen pro cm² bis 50.000 Vorsprüngen pro cm². Weiterhin weisen die Vorsprünge insbesondere eine maximale Breite von 500 nm bis 3 µm, besonders bevorzugt von 30 bis 100 µm, auf. Das korrespondierende Haftmittel ist in diesem Fall eine hinreichend glatte Fläche und kann beispielsweise durch eine Wand oder eine Glasscheibe gegeben sein.

Ebenfalls ist denkbar, dass das Verbindungssystem unter Verwendung eines Klebstoffs bzw.einer Klebstoffschicht realisiert wird.

Um die Möglichkeit der Ausführung der oben angesprochenen, besonders bevorzugten Weiterbildung des Verfahrens zu gewährleisten, weist das Verbindungssystem vorzugsweise eine Kommunikationskomponente auf.

Weiter bevorzugt ist die Kommunikationskomponente an oder in einem der Haftmittel angeordnet oder ausgebildet. Analog zur Anordnung/Ausbildung der Sensoranordnung werden auch hierbei Ausführungen bevorzugt, bei denen die Kommunikationskomponente integraler Bestandteil der Struktur eines der Haftmittel oder beider Haftmittel ist. Weiterhin analog zur Anordnung/Ausbildung der Sensoranordnung kann die Kommunikationskomponente ebenfalls an oder in einer Trägerfolie angeordnet oder ausgebildet sein.

Was unter dem Begriff ,integraler Bestandteil der Struktur' zu verstehen ist, kann aus dem im Folgenden beanspruchten Herstellungsverfahren abgeleitet werden. Es versteht sich dennoch, dass auch Strukturen aus einem oder mehreren Haftmittel(n) und einer Sensoranordnung und/oder einer Kommunikationskomponente von dem Merkmal umfasst werden, welche nach anderen Herstellungsverfahren geschaffen sind, bei welchen Herstellungsverfahren jedoch ein Strukturverbund vergleichbarer Art erzeugt wird.

Die Kommunikationskomponente kann so ausgebildet sein, dass sie die Speichereinrichtung aufweist; weiter kann sie so ausgebildet sein, dass sie alternativ oder zusätzlich die Datenverarbeitungseinrichtung aufweist.

Wie oben erwähnt, eignet sich insbesondere ein passives Element, welches ohne angeschlossene Energieversorgung auskommt, als Kommunikationskomponente. Beispielsweise kommt hier ein passiver RFID-Transponder (Radio-Frequency IDentification), insbesondere ein NFC-Transponder (Near Field Communication) oder ein HF-Transponder (High Frequency) oder ein UHF-Transponder (Ultra High Frequency), zum Einsatz. Das Versenden der Daten erfordert in diesem Fall ein externes Lesegerät. Vorteilhaft sind dabei insbesondere der einfache Aufbau, die einfache Konnektivität, der niedrige Energieverbrauch und die Interoperabilität. Nichtsdestotrotz lässt sich das erfindungsgemäße Verfahren und Verbindungssystem auch mithilfe einer aktiven oder semi-passiven Kommunikationskomponente realisieren. Neben aktiven und semi-passiven RFID-Transpondern umfasst dies insbesondere Geräte, welche Technologien wie Bluetooth, Infrarotübertragung, Wi-Fi, Mobilfunk, ZigBee oder LoRaWAN (Long Range Wide Area Network) zur Kommunikation nutzen.

Bei einer Ausführungsvariante weist das Verbindungssystem zumindest zwei, vorzugsweise mehr als zwei, Kommunikationskomponenten auf. Beispielsweise können mehrere mit Sensorelementen ausgestattete RFID-Transponder in Form einer Matrix an einem Haftmittel angeordnet sein, wobei ein Signal bestimmter Transponder zur Positionsbestimmung herangezogen werden kann. Alternativ kann die Sensoranordnung durch die RFID-Transponder selbst gebildet werden. Dabei weisen die RFID-Transponder keine separaten Sensorelemente auf, sondern stellen sowohl die Sensoranordnung als auch die Kommunikationskomponenten bereit. Beispielsweise kann so mittels eines an einem korrespondierenden Haftmittel des Verbindungssystems angeordnetem Lesegerät eine Aussage über die Relativposition der Haftmittel zueinander getroffen werden, indem bestimmt wird, welcher jeweilige RFID-Transponder auf eine Abfrage des Lesegeräts antwortet.

In einem bevorzugten Anwendungsfall liegt das Verbindungssystem als Set in Kombination mit einem Funktionselement vor. Das Funktionselement kann insbesondere ein Mobilfunkrouter, bevorzugt ein 5G-Router, sein. Das Funktionselement kann dabei vorzugsweise an einem der Haftmittel angeordnet sein. Ist das Funktionselement ein Mobilfunkrouter, kann dieser wahlweise unabhängig von der Sensoranordnung und/oder der Kommunikationskomponente des Verbindungssystems operieren oder zum Auslesen oder Empfangen und Weiterleiten der Daten der Sensoranordnung konfiguriert sein. Unter dem Funktionselement kann unabhängig davon auch jegliches anzuhaftende Objekt verstanden werden, für welches ein Zustand der damit verbundenen Haftverbindung bestimmt werden soll. Insbesondere kommen weitere Netzwerkkomponenten (beispielsweise Repeater) oder weitere elektronische Komponenten (Bildschirme, LED-Folien) als Funktionselemente in Frage.

Die Aufgabe wird auch gelöst durch ein Verfahren zur Herstellung eines Verbindungssystems, wobei eine Sensoranordnung in einem ersten und/oder einem zweiten Haftmittel integriert wird, oder an einem ersten und/oder zweiten Haftmittel angeordnet wird. Die Integration/Anordnung erfolgt durch Einweben oder Einbetten, insbesondere Einbetten in eine Kavität, oder flächiges Verkleben.

Ein alternativer oder weiterer Verfahrensschritt beinhaltet die Integration/Anordnung einer Kommunikationskomponente in oder an dem ersten und/oder zweiten Haftmittel durch Einweben, Einbetten, insbesondere Einbetten in eine Kavität, flächiges Verkleben, Aufdrucken oder Aufdampfen.

Die beiden Verfahrensschritte müssen dabei nicht notwendigerweise nacheinander erfolgen. Ebenso ist denkbar, dass beispielsweise eine Sensoranordnung und eine Kommunikationskomponente zeitgleich in ein und dieselbe Kavität eingebettet werden. Weiterhin besteht ebenfalls die Möglichkeit, das Herstellungsverfahren über nur einen der Verfahrensschritte zu realisieren, wobei der jeweils andere Verfahrensschritt als optional zu betrachten ist. Das Verbindungssystem kann dabei wie vorstehend und/oder in der Zeichnungsbeschreibung erläutert ausgebildet sein.

Eine besonders vorteilhafte Realisierung des Herstellungsverfahrens kann erreicht werden, indem eine fortlaufende Sensorfolie und/oder eine fortlaufende kommunikationskomponententragende Folie verwendet wird, wobei die jeweiligen Sensor- bzw. Kommunikationselemente insbesondere in regelmäßigen Abständen an oder in der Folie angeordnet oder ausgebildet sind. So kann das Verbindungssystem in einem kontinuierlichen Prozess gefertigt werden. Beispielsweise kann eines der Haftmittel von einer Rolle abgewickelt werden (bzw. direkt aus dessen eigenem Produktionsprozess zugeführt werden) und in einem kontinuierlichen Prozess mit einem Klebstoff versehen werden, auf welchen anschließend in einem weiteren kontinuierlichen Prozess die Sensorfolie und/oder die kommunikationskomponententragende Folie aufgebracht werden kann. Die jeweilige Folie kann dabei insbesondere ebenfalls von einer Rolle abgewickelt werden. Anschließend kann insbesondere eine zweite Klebstoffschicht aufgebracht werden, um ein Einbetten der jeweiligen Trägerfolie zu erreichen.

In ähnlicher Weise kann eine kontinuierliche Produktion erreicht werden, indem jeweils eine Sensoranordnung/Kommunikationskomponente (ggf. mit einem Teil einer Trägerfolie) abschnittsweise auf der Rückseite eines der Haftmittel angeordnet wird und anschließend mit einer Klebstoffschicht überzogen wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Kurzbeschreibung der Zeichnung

Es zeigen:
- Fig. 1: ein Set aus einem Funktionselement, hier in Form eines Mobilfunkrouters und einem Verbindungssystem, wobei das Verbindungssystem eine Sensoranordnung - aufweisend optische Sensorelemente - sowie zwei Kommunikationskomponenten aufweist;
- Fig. 2a: eine teilweise geschnittene Seitenansicht eines weiteren Verbindungssystems im verbundenen Zustand mit Magnet und einer Sensoranordnung - aufweisend einen Magnetsensor - sowie eine Kommunikationskomponente;
- Fig. 2b: eine teilweise geschnittene Seitenansicht des Verbindungssystems aus Fig. 2a im gelösten Zustand;
- Fig. 3a: eine teilweise geschnittene Seitenansicht eines weiteren Verbindungssystems im verbundenen Zustand mit Magnet und einer Sensoranordnung - aufweisend einen Magnetsensor - sowie eine Kommunikationskomponente;
- Fig. 3b: eine teilweise geschnittene Seitenansicht des Verbindungssystems aus Fig. 3a im gelösten Zustand;
- Fig. 4a: ausschnittsweise ein weiteres Verbindungssystem im gelösten Zustand mit Magnet und einer Sensoranordnung - aufweisend Magnetsensoren - sowie eine Anzeige;
- Fig. 4b: ausschnittsweise das Verbindungssystem aus Fig. 4a im verbundenen oder in angenähertem Zustand in Fehlausrichtung sowie die entsprechende Anzeige;
- Fig. 4c: ausschnittsweise das Verbindungssystem aus den Fign. 4a und 4b im verbundenen oder in angenähertem Zustand in korrekter Ausrichtung sowie die entsprechende Anzeige;
- Fig. 5a: eine teilweise geschnittene Seitenansicht eines weiteren Verbindungssystems im verbundenen und in Verbindungsrichtung belasteten Zustand mit einer Sensoranordnung - aufweisend einen Drucksensor - sowie einen Ausgabewert des Drucksensors;
- Fig. 5b: eine teilweise geschnittene Seitenansicht des Verbindungssystems aus Fig. 5a im verbundenen und gegen die Verbindungsrichtung belasteten Zustand sowie einen entsprechenden Sensorausgabewert;
- Fig. 5c: eine teilweise geschnittene Seitenansicht des Verbindungssystems aus den Fign. 5a und 5b im gelösten Zustand sowie einen entsprechenden Sensorausgabewert;
- Fig. 5d: eine Visualisierung der Ausgabewerte aus den Fign. 5a-5c;
- Fig. 6a: ein Flussdiagramm einer Weiterbildung eines erfindungsgemäßen Verfahrens;
- Fig. 6b: ein Flussdiagramm einer weiteren Weiterbildung des erfindungsgemäßen Verfahrens;
- Fig. 7: ein Flussdiagramm eines Herstellungsverfahrens für ein Verbindungssystem;
- Fig. 8: ausschnittsweise vier Varianten eines ersten Haftmittels mit einer Sensoranordnung;
- Fig. 9: ausschnittsweise eine weitere Variante eines ersten Haftmittels mit einer Sensoranordnung.

### Detaillierte Beschreibung der Erfindung und Zeichnung

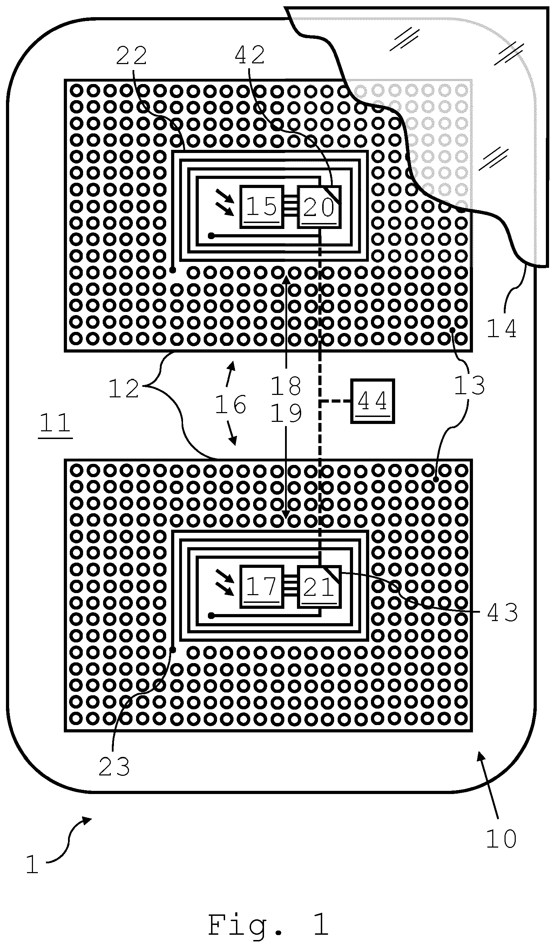

**Fig. 1** zeigt ein Set **1** aus einem Funktionselement, hier in Form eines Mobilfunkrouters **11** und einem Verbindungssystem **10,** wobei das Verbindungssystem 10 ein erstes Haftmittel **12** aufweist, welches im Rahmen der vorliegenden Darstellung zweiteilig ausgestaltet ist. Das erste Haftmittel 12 ist mithilfe einer mikrostrukturierten Oberfläche **13** des ersten Haftmittels 12 an einem zweiten Haftmittel **14** (ausschnittsweise dargestellt) angeordnet.

Das zweite Haftmittel 14 wird im vorliegenden Ausführungsbeispiel durch eine Glasscheibe gebildet. In das erste Haftmittel 12 eingebettet, befinden sich ein erstes optisches Sensorelement **15** und ein zweites optisches Sensorelement **17,** welche jeweils eine Strahlungsenergie erfassen. Die beiden optischen Sensorelemente 15, 17 bilden die Sensoranordnung **16.**

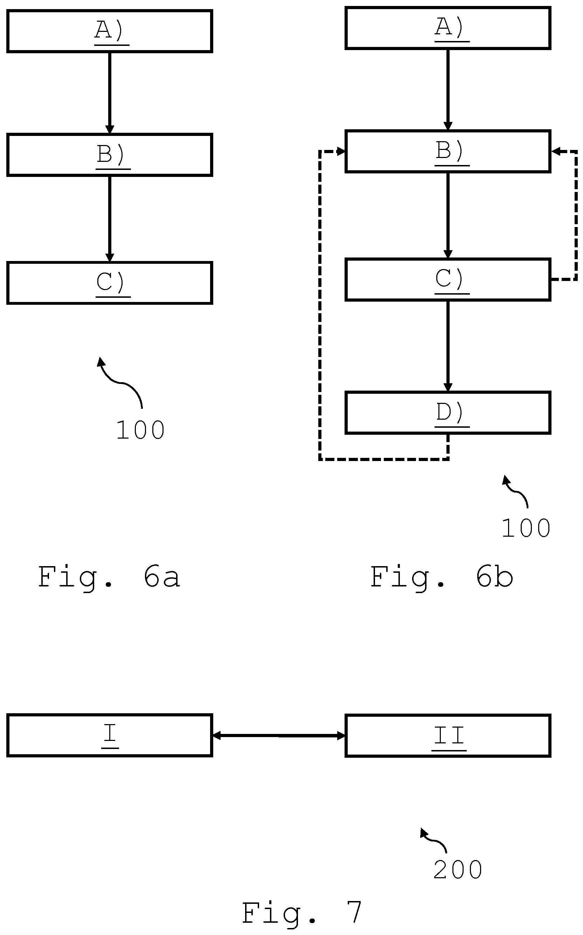

Die jeweiligen optischen Sensorelemente 15, 17 sind an jeweilige Kommunikationskomponenten **18, 19** gekoppelt. Die Kommunikationskomponenten 18, 19 sind im vorliegenden Ausführungsbeispiel als RFID-Transponder, aufweisend jeweils eine Datenverarbeitungseinrichtung **20, 21** und je eine Antenne **22, 23** ausgebildet. Die jeweiligen Datenverarbeitungseinrichtungen 20, 21 enthalten dabei jeweils Speichereinrichtungen **42, 43.** Eine Steuerung **44** ist zur Durchführung des erfindungsgemäßen Verfahrens **100** (siehe Fig. 6a) in einer Weiterbildung konfiguriert.

Auf der Rückseite des ersten Haftmittels 12 ist der Mobilfunkrouter 11 angeordnet. Der Mobilfunkrouter 11 kann dabei über einen beliebig wählbaren Verbindungsmechanismus, beispielsweise unter Verwendung eines Klebstoffes, an dem ersten Haftmittel 12 befestigt sein. Wahlweise kann der Mobilfunkrouter 11 als Lesegerät zum Auslesen der Daten der Sensoranordnung 16 eingerichtet sein. Ebenso ist denkbar, dass der Mobilfunkrouter 11 unabhängig von den Kommunikationskomponenten 18, 19 betrieben wird.

Im Rahmen der dargestellten Ausführungsvariante kann, unter der Bedingung, dass eine angemessene Ausleuchtung der Umgebung durch natürliches und/oder künstliches Licht gegeben ist, über einen Vergleich der Sensordaten der optischen Sensorelemente 15, 17 ein Anhaftungszustand des ersten Haftmittels 12 an dem zweiten Haftmittel 14 abgeleitet werden. Bei einer weiteren Ausführungsvariante können die Sensorelemente 15, 17 aktiv einen Lichtstrahl aussenden und Daten zu dessen Reflexion erfassen.

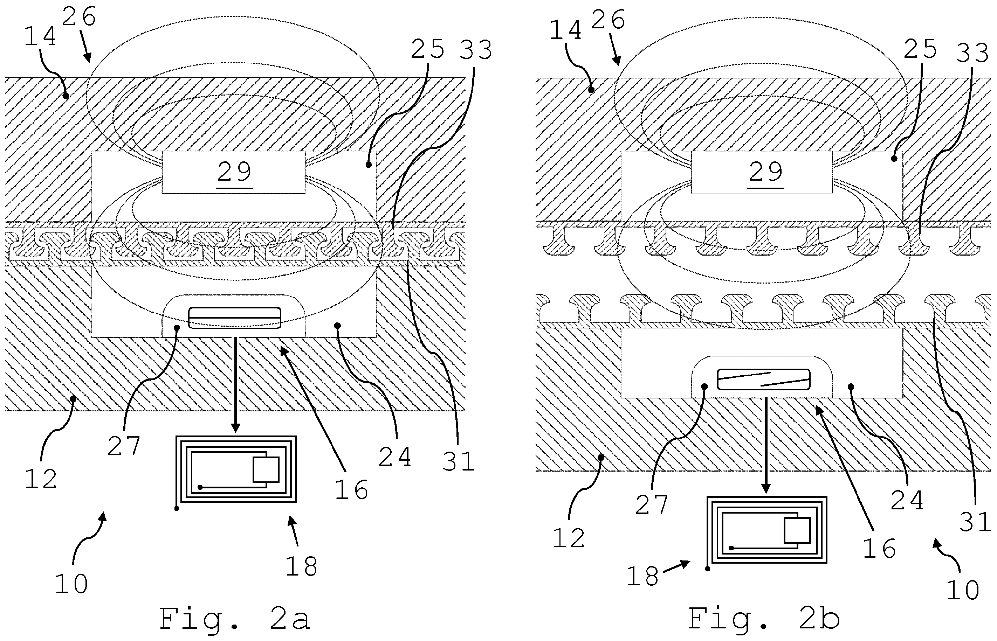

**Fig. 2a** und **Fig. 2b** zeigen eine weitere Ausführungsvariante eines Verbindungssystems 10, jeweils ausschnittsweise und in einer teilweise geschnittenen Seitenansicht. Ein erstes Haftmittel 12 weist dabei insbesondere eine Kavität **24** auf, in welche eine Sensoranordnung 16 eingebettet ist. Die Sensoranordnung 16 wird durch einen Magnetsensor **27,** hier in Form eines Reed-Schalters, gebildet. Ein zweites Haftmittel 14 weist einen, insbesondere in eine Kavität **25** des zweiten Haftmittels 14 eingebetteten, Permanentmagneten **29** (Magnetfeldlinien angedeutet) auf, welcher bei einer Annäherung/Verbindung zwischen dem ersten und zweiten Haftmittel 12, 14 zur Auslösung des Magnetsensors 27 geeignet ist. Eine Haftverbindung kann im dargestellten Ausführungsbeispiel durch einen Haftverschluss **26,** beispielsweise über jeweils an dem ersten und zweiten Haftmittel 12, 14 angeordnete Pilzköpfe **31, 33** hergestellt werden.

In Fig. 2a ist das Verbindungssystem 10 im verbundenen Zustand dargestellt, wobei der Permanentmagnet 29 einen verhältnismäßig großen Einfluss auf den Magnetsensor 27 ausübt. Dadurch werden Kontaktzungen innerhalb des Magnetsensors 27 miteinander in Verbindung gebracht und der Magnetsensor 27 erzeugt ein entsprechendes Signal.

In Fig. 2b befindet sich das Verbindungssystem 10 im gelösten Zustand, wobei sich der Magnetsensor 27 außerhalb des für ihn wahrnehmbaren Einflussbereiches des Permanentmagneten 29 befindet, wobei die Kontaktzungen des Magnetsensors 27 voneinander getrennt sind. Die Sensordaten werden in den in Fign. 2a und 2b dargestellten Zuständen jeweils an eine Kommunikationskomponente 18 übertragen. Die Kommunikationskomponente 18 ist in Analogie zu der Ausführungsvariante aus Fig. 1 in Form eines RFID-Transponders ausgebildet. Im Gegensatz zu der Sensoranordnung 16 ist die Kommunikationskomponente 18 in diesem Ausführungsbeispiel nicht integraler Bestandteil der Haftmittel 12, 14.

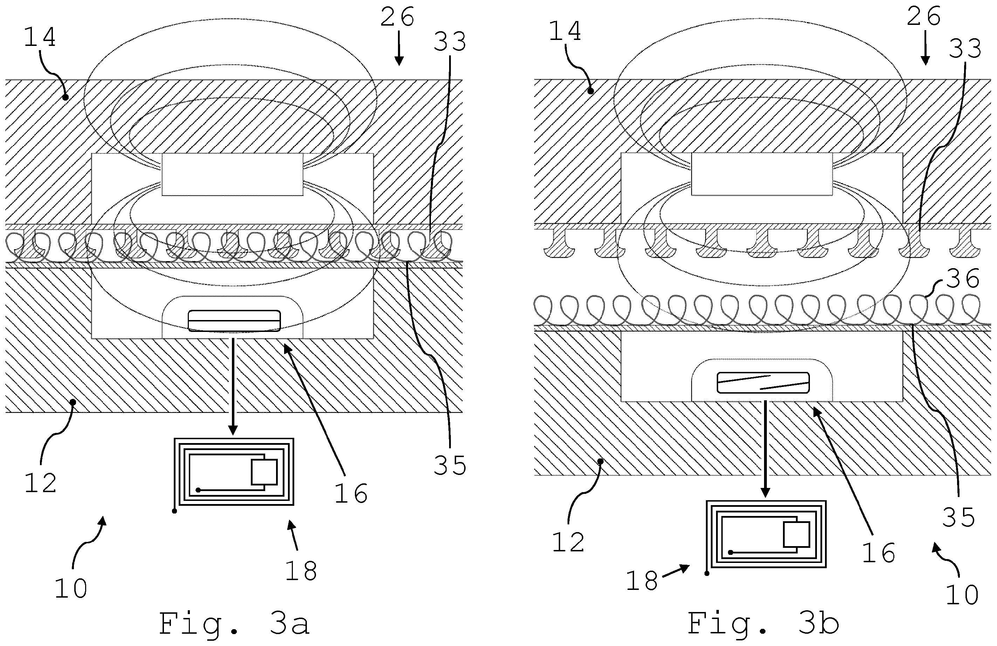

**Fig. 3a** und **Fig. 3b** zeigen eine weitere Ausführungsvariante eines Verbindungssystems 10, jeweils ausschnittsweise und in einer teilweise geschnittenen Seitenansicht. Die Funktionsweise einer Sensoranordnung 16 und einer Kommunikationskomponente 18 sowie der grundlegende Aufbau des Verbindungssystems 10 entsprechen dabei der Ausführungsvariante aus den Fign. 2a und 2b. Im Unterschied zur vorherigen Variante ist eine weitere Form eines Haftverschlusses 26, hier in Form eines Klettverschlusses, dargestellt. Ein erstes Haftmittel 12 weist Schlaufen **36** eines Flauschbandes **35** auf. Ein zweites Haftmittel 14 weist Pilzköpfe 33 auf, welche mit den Schlaufen 36 des Flauschbandes 35 verhaken können.

In Fig. 3a ist das Verbindungssystem 10 wiederum im verbundenen Zustand dargestellt, während Fig. 3b den gelösten Zustand abbildet.

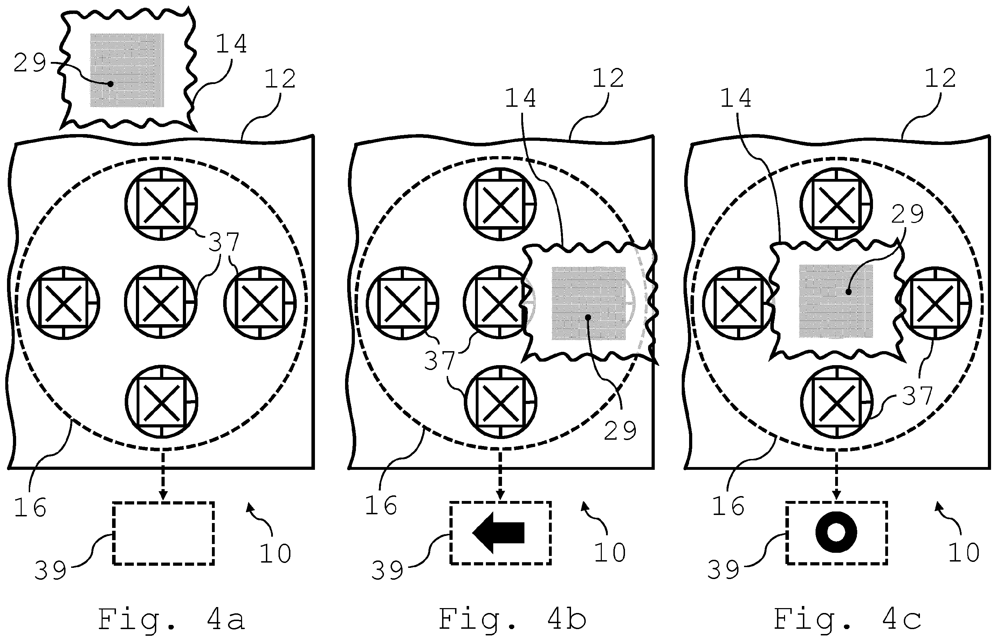

**Fig. 4a, Fig. 4b** und **Fig. 4c** zeigen, jeweils ausschnittsweise, eine weitere Ausführungsvariante eines Verbindungssystems 10. Eine Sensoranordnung 16 weist mehrere Magnetsensoren **37** auf, welche hier als Hall-Sensoren ausgebildet sind. Ebenso ist eine Ausführung der Magnetsensoren 27 als Reed-Schalter denkbar (vgl. Fign. 2a-3b). Die Sensoranordnung 16 ist in ein erstes Haftmittel 12 integriert. Ein zweites Haftmittel 14 weist einen Permanentmagneten 29 auf. Eine oder mehrere Kommunikationskomponente(n) 18, 19 (siehe Fig. 1) dienen zur Übertragung der unverarbeiteten oder verarbeiteten Sensordaten auf Grundlage derer eine Anzeige an einem Anzeigemittel **39** bezüglich der Positionierung des ersten Haftmittels 12 in Relation zum zweiten Haftmittel 14 ausgegeben wird. Es versteht sich, dass das Verbindungssystem 10 im vorliegenden Ausführungsbeispiel so eingerichtet ist, dass zur Ausgabe der Anzeige bereits ein Annähern der Haftmittel 12, 14 ausreichend ist, wobei das Herstellen einer tatsächlichen haftenden Verbindung zu diesem Zweck optional ist. Es versteht sich weiterhin, dass die dargestellte Anzeige nicht notwendigerweise ein optisches Anzeigemittel 39 erfordert, sondern gleichwertig durch beispielsweise ein akustisches und/oder haptisch wirkendes Anzeigemittel 39 realisiert werden kann. Ebenfalls ist denkbar, dass das Anzeigemittel 39 an dem Verbindungssystem 10 angeordnet oder ausgebildet ist, wobei ein drahtloses Versenden der Daten nicht nötig ist und wobei die Kommunikationskomponente(n) 18, 19 (siehe Fig. 1) nicht genutzt wird/werden oder erst gar nicht vorhanden ist/sind.

In Fig. 4a ist das Verbindungssystem 10 im gelösten, nicht-angenäherten Zustand dargestellt. Die Daten der Sensoranordnung 16 des ersten Haftmittels 12 werden dabei zur Anzeige des Zustandes herangezogen, wobei die Anzeige des Zustandes auch das Ausbleiben eines Signals umfassen kann. Die Unterscheidung zwischen dem nicht-angenäherten und dem angenäherten Zustand erfolgt anhand der Erfassbarkeit des Permanentmagneten 29 durch zumindest einen der Magnetsensoren 37.

In Fig. 4b ist ein Zustand dargestellt, in welchem die Haftmittel 12, 14 aneinander angenähert oder mit einander verbunden sind, wobei die relative Position der Haftmittel 12, 14 nicht einer vorgesehenen Konfiguration entspricht. Die erzeugte Anzeige deutet im vorliegenden Fall sowohl die Fehlkonfiguration als auch die vorzunehmende Korrekturmaßnahme an.

In Fig. 4c ist ein Zustand dargestellt, in dem das erste und zweite Haftmittel 12, 14 aneinander angenähert oder miteinander verbunden sind, wobei deren relative Position einer vorgesehenen Ausrichtung entspricht. Die Anzeige des Anzeigemittels 39 signalisiert den entsprechenden Zustand.

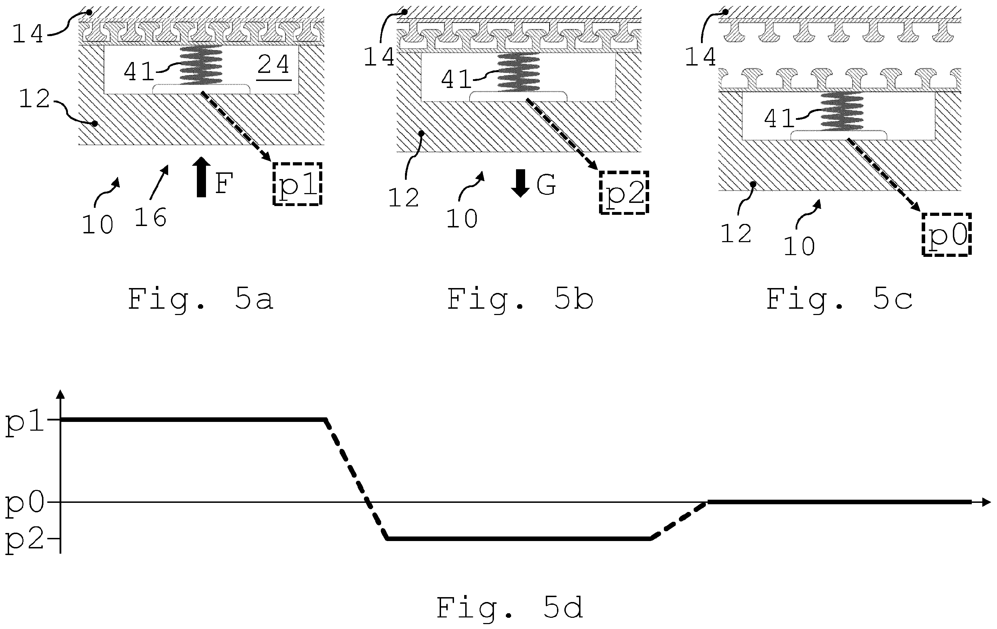

**Fig. 5a, Fig. 5b** und **Fig. 5c** zeigen eine weitere Ausführungsvariante eines Verbindungssystems 10, jeweils ausschnittsweise und in einer teilweise geschnittenen Seitenansicht. Eine Sensoranordnung 16 weist einen Drucksensor **41,** insbesondere einen bidirektional-differenziellen Drucksensor 41, auf. Der Drucksensor 41 ist im Rahmen der vorliegenden Darstellung schematisch als mechanisches Element abgebildet. Es versteht sich, dass auch andere Formen eines Drucksensors 41, wie beispielsweise ein piezoresistives Element, zum Einsatz kommen können. Die Sensoranordnung 16 ist insbesondere in eine Kavität 24 eines ersten Haftmittels 12 eingebettet. Die weiteren Komponenten des Verbindungssystems 10 entsprechen der in den Fign. 2a und 2b dargestellten Ausführungsvariante.

In Fig. 5a ist das Verbindungssystem 10 im verbundenen Zustand dargestellt, wobei das erste Haftmittel 12 durch eine Kraft **F** in Richtung eines zweiten Haftmittels 14 (d.h. in Verbindungsrichtung) belastet wird. Das zweite Haftmittel 14 ist dabei ortsfest. Die Kraft F kann beispielsweise manuell beim initialen Verbinden der Haftmittel 12, 14 aufgebracht werden. Der Drucksensor 41 der Sensoranordnung 16 erfasst die Auswirkung der Kraft F an der Kontaktfläche der Haftmittel 12, 14 in Form des Drucks **p1.**

In Fig. 5b wirkt eine Kraft **G** auf das System. Das zweite Haftmittel 14 ist wiederum ortsfest. Die Kraft G kann beispielsweise die auf das erste Haftmittel 12 wirkende Schwerkraft sein. Durch die Kraft G wird die Verbindung zwischen dem ersten und dem zweiten Haftmittel 12, 14 entgegen der Verbindungsrichtung belastet, wobei der Drucksensor 41 den Wert **p2** erfasst.

In Fig. 5c ist, oder hat sich, die Verbindung zwischen dem ersten Haftmittel 12 und dem zweiten Haftmittel 14 gelöst. Der Drucksensor 41 registriert in diesem Fall den Wert **p0.** Dies weist ein willentliches oder unwillentliches Lösen der Haftverbindung nach. Mithilfe der Sensorwerte lässt sich der Verbindungs- und Belastungszustand (bzw. der Belastungszustand und der Nicht-Belastungszustand) des Verbindungssystems 10 zuverlässig bestimmen. Dies kann sowohl beim bestimmungsgemäßen Einsatz des Verbindungssystems 10 als auch im Rahmen der Überprüfung und Weiterentwicklung des Verbindungssystems 10 vorteilhaft sein. Vorzugsweise weist das Verbindungssystem 10 mehrere Drucksensoren 41 (nicht dargestellt) auf.

In **Fig. 5d** ist eine Visualisierung der Werte p1, p0 und p2 aus den Fign. 5a-5c dargestellt.

**Fig. 6a** zeigt ein Flussdiagramm einer Variante des erfindungsgemäßen Verfahrens 100 in einer bevorzugten Weiterbildung. In Schritt **A)** wird ein erstes Haftmittel 12 (siehe Fig. 1) an einem zweiten Haftmittel 14 (siehe Fig. 1) angebracht. In Schritt **B)** wird ein Parameter durch eine Sensoranordnung 16 (siehe Fig. 1) erfasst. In Schritt **C)** erfolgt ein Versenden von verarbeiteten oder unverarbeiteten Sensordaten mittels einer Kommunikationskomponente 18 (siehe Fig. 1).

**Fig. 6b** zeigt ein Flussdiagramm einer weiteren Variante des erfindungsgemäßen Verfahrens 100 in einer Weiterbildung. In Schritt A) wird ein erstes Haftmittel 12 (siehe Fig. 1) an ein zweites Haftmittel 14 (siehe Fig. 1) angenähert. In Schritt B) wird ein Parameter betreffend die Positionierung durch eine Sensoranordnung 16 (siehe Fig. 1) erfasst. Insbesondere wird dabei die relative Position der Haftmittel 12, 14 (siehe Fig. 1) zueinander in einer Ebene parallel zu deren flächigen Ausdehnungen erfasst (entspricht der Darstellungsebene der Fign. 1, 4a-4c). In Schritt C) erfolgt ein Versenden von verarbeiteten oder unverarbeiteten Sensordaten mittels einer Kommunikationskomponente 18 (siehe Fig. 1). Abhängig vom Gehalt der Sensordaten können die Teilschritte B) und C) mehrfach nacheinander durchlaufen werden. In Schritt **D)** erfolgt ein Anbringen des ersten Haftmittels 12 (siehe Fig. 1) an dem zweiten Haftmittel 14 (siehe Fig. 1). Optional kann nach Schritt D) wiederum Schritt B) unter Erfassung eines weiteren Parameters folgen.

**Fig. 7** zeigt ein Flussdiagramm eines Herstellungsverfahrens **200** für ein Verbindungssystem 10 (siehe Fig. 1). In Schritt **I** erfolgt die Integration einer Sensoranordnung 16 (siehe Fig. 1) beispielsweise in ein erstes Haftmittel 12 (siehe Fig. 1). In Schritt **II** erfolgt die Integration einer Kommunikationskomponente 18 (siehe Fig. 1) beispielsweise in das erste Haftmittel 12 (siehe Fig.1). Alternativ kann zuerst Schritt II und anschließend Schritt I ausgeführt werden, oder es können Schritt I und Schritt II zeitgleich ausgeführt werden. Weiter alternativ kann nur einer der Schritte ausgeführt werden.

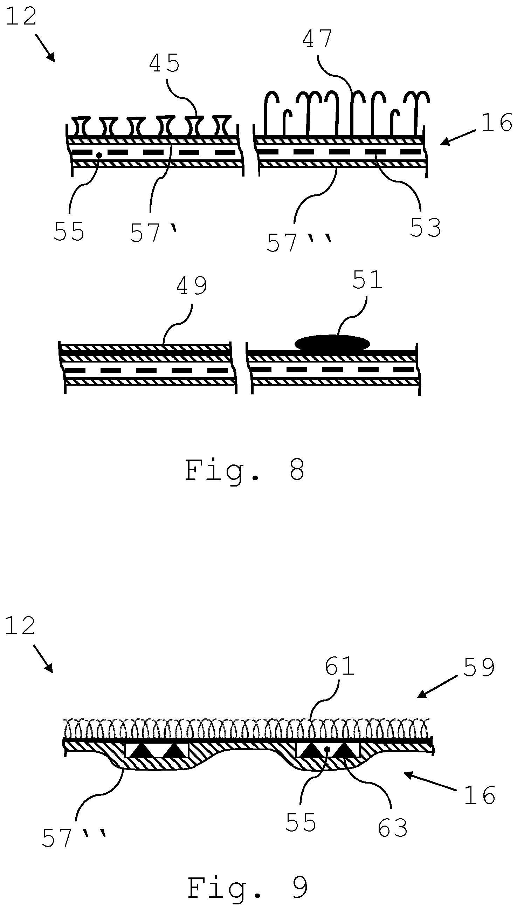

**Fig. 8** zeigt vier Varianten eines ersten Haftmittels 12 eines Verbindungssystems 10 (siehe Fig. 1) mit einer Sensoranordnung 16. Die vier Varianten unterscheiden sich ausschließlich durch die zur Realisierung des Haftverschlusses 26 (siehe Fig. 2a) verwendeten Haftelemente. Es sind palmenförmige Haftelemente **45,** Haken **47,** eine Klebstoffschicht **49** sowie die Hälfte eines Druckknopfes **51** dargestellt.

Die vier Varianten wurden in Schritt I des Herstellungsverfahrens 200 (siehe Fig. 7) in vorteilhafter Weise hergestellt. Die Sensoranordnung 16 weist in diesem Fall Dehnungssensoren **53** auf, welche in einer Trägerfolie **55** angeordnet sind. Die Trägerfolie 55 mit den Dehnungssensoren 53 ist über eine Klebstoffschicht **57'** an dem ersten Haftmittel 12 angeordnet. Eine weitere Klebstoffschicht **57"** sorgt für ein Einbetten der Trägerfolie 55. Es sei hier nochmal verdeutlicht, dass die Klebstoffschicht 49 nicht zum Einbetten der Trägerfolie 55 dient, sondern zur Herstellung der Haftverbindung des Verbindungssystems 10 (siehe Fig. 1). Die Klebstoffschicht 49 kann bei der Produktion insbesondere mit einem Trennpapier (release liner) versehen werden (nicht dargestellt).

**Fig. 9** zeigt eine weitere Variante eines ersten Haftmittels 12 mit einer Sensoranordnung 16. Das erste Haftmittel weist dabei einen Vliesstoff **59** mit entsprechenden Fasern **61** auf. Die Sensoranordnung 16 weist Kraftsensoren **63** auf, welche in einer Trägerfolie 55 angeordnet sind. Die Trägerfolie 55 mit den Kraftsensoren 63 ist abschnittsweise an der Rückseite des ersten Haftmittels 12 angeordnet und mittels einer Klebstoffschicht 57" eingebettet. Die dargestellte Variante lässt sich ebenso wie die Varianten aus Fig. 8 in einem kontinuierlichen Produktionsprozess herstellen.

Unter Vornahme einer Zusammenschau aller Figuren der Zeichnung betrifft die Erfindung zusammenfassend ein Verfahren 100 zur Zustandsbestimmung eines Verbindungssystems 10, aufweisend ein erstes Haftmittel 12, ein zweites Haftmittel 14 und eine Sensoranordnung 16. Das Verfahren 100 kann insbesondere zur Bestimmung einer Position der Haftmittel 12, 14 relativ zueinander verwendet werden, wobei das erste Haftmittel 12 an das zweite Haftmittel 14 angenähert und/oder angebracht wird und zumindest ein Parameter betreffend die Positionierung durch die Sensoranordnung 16 erfasst wird. Nach der Ausrichtung der Haftmittel 12, 14 kann ein endgültiges Anbringen (ggf. Wiederanbringen) erfolgen. Das Verfahren 100 kann gleichermaßen insbesondere zur Erfassung der Anhaftung des ersten Haftmittels 12 an dem zweiten Haftmittel 14 und/oder zur Bestimmung der Belastung bzw. der Nicht-Belastung einer Haftverbindung verwendet werden. Bei einer bevorzugten Weiterbildung des Verfahrens 100 können verarbeitete und/oder unverarbeitete Sensordaten mittels einer Kommunikationskomponente 18 drahtlos versendet werden. Die Erfindung betrifft weiterhin ein Verbindungssystem 10, welches zur Durchführung des vorgenannten Verfahrens 100 (ggf. inklusive der Weiterbildungen dieses Verfahrens 100) eingerichtet ist und ein Set 1, aufweisend das Verbindungssystem 10 und ein Funktionselement, insbesondere einen Mobilfunkrouter 11. Die Erfindung betrifft auch ein Verfahren 200 zur Herstellung des vorgenannten Verbindungssystems 10.

### Bezugszeichenliste

- 1: Set
- 10: Verbindungssystem
- 11: Mobilfunkrouter
- 12: erstes Haftmittel
- 13: mikrostrukturierte Oberflä- che
- 14: zweites Haftmit -tel
- 15: erstes optisches Sensorelement
- 16: Sensoranordnung
- 17: zweites optisches Sensorelement
- 18: Kommunikationskomponente
- 19: Kommunikationskomponente
- 20: Datenverarbeitungseinrichtung
- 21: Datenverarbeitungseinrichtung
- 22: Antenne
- 23: Antenne
- 24: Kavität
- 25: Kavität
- 26: Haftverschluss
- 27: Magnetsensor (Reed-Schalter)
- 29: Permanentmagnet
- 31: Pilzköpfe
- 33: Pilzköpfe
- 35: Flauschband
- 36: Schlaufe
- 37: Magnetsensor (Hall-Sensor)
- 39: Anzeigemittel
- 41: Drucksensor
- 42: Speichereinrichtung
- 43: Speichereinrichtung
- 44: Steuerung
- 45: palmenförmiges Haftelement
- 47: Haken
- 49: Klebstoffschicht
- 51: Hälfte eines Druckknopfes
- 53: Dehnungssensor
- 55: Trägerfolie
- 57': Klebstoffschicht
- 57": Klebstoffschicht
- 59: Vliesstoff
- 61: Faser
- 63: Kraftsensor
- 100: Verfahren zur Zustandserfassung eines Verbindungssystems
- 200: Verfahren zur Herstellung eines Verbindungssystems

## Patentansprüche

1. Verfahren (100) zur Zustandserfassung eines Verbindungssystems (10), wobei das Verbindungssystem (10) ein erstes Haftmittel (12) und ein zweites Haftmittel (14) aufweist, zwischen welchen eine Haftverbindung hergestellt wird, und wobei das Verbindungssystem (10) eine Sensoranordnung (16) aufweist,
wobei das Verfahren (100) folgende Schritte aufweist:
A) Annähern und/oder Anbringen des ersten Haftmittels (12) an das/dem zweite(n) Haftmittel (14);
B) Erfassen zumindest eines Parameters durch die Sensoranordnung (16) betreffend einen Zustand der Haftverbindung;
D) Anbringen des ersten Haftmittels (12) an dem zweiten Haftmittel (14), falls dies nicht bereits unter Schritt A) erfolgt ist.

2. Verfahren (100) nach Anspruch 1, wobei die Sensoranordnung (16) ein Sensorelement (15, 27, 41, 53, 63) zur Erfassung einer Verschiebung, einer Dehnung, einer Kraft, eines Drucks, einer Strahlungsenergie, einer Stoffmengenkonzentration oder einer Magnetfeldstärke zwischen dem ersten Haftmittel (12) und dem zweiten Haftmittel (14) aufweist.

3. Verfahren (100) nach Anspruch 1 oder Anspruch 2,
wobei die Sensoranordnung (16) zumindest eines der folgenden Sensorelemente (15, 27, 41, 53, 63) aufweist;
a) ein optisches Sensorelement (15);
b) einen Magnetsensor (27);
c) einen Drucksensor (41);
d) einen Kraftsensor (53);
e) einen Dehnungssensor (63);
mit welchem Sensorelement (15, 27, 41, 53, 63) der zumindest eine Parameter erfasst wird; und/oder
wobei der zumindest eine Parameter
i. die Positionierung des ersten Haftmittels (12);
ii. die Anhaftung des ersten Haftmittels (12); und/oder
iii. die Belastung der Haftverbindung, einschließlich deren Nicht-Belastung
betrifft.

4. Verfahren (100) nach einem der vorhergehenden Ansprüche, wobei die Sensoranordnung (16) zwei oder mehr, gleichartige oder unterschiedliche Sensorelemente (15, 27, 41, 53, 63) aufweist, mit welchen Sensorelementen (15, 27, 41, 53, 63) der zumindest eine Parameter erfasst wird.

5. Verfahren (100) nach einem der vorhergehenden Ansprüche, wobei die Daten der Sensoranordnung (16) vollständig oder teilweise in einer Speichereinrichtung (42) des Verbindungssystems (10) zumindest zeitweise gespeichert werden.

6. Verfahren (100) nach einem der vorhergehenden Ansprüche, wobei das Verbindungssystem (10) eine Datenverarbeitungseinrichtung (20) aufweist, in welcher die Daten der Sensoranordnung (16) verarbeitet werden.

7. Verfahren (100) nach einem der vorhergehenden Ansprüche, wobei das Verbindungssystem (10) eine Kommunikationskomponente (18) aufweist, wobei das Verfahren (100) zusätzlich einen Schritt C), wie folgt, aufweist:
C) Drahtloses Versenden von verarbeiteten oder unverarbeiteten Daten der Sensoranordnung (16) mittels der Kommunikationskomponente (18).

8. Verbindungssystem (10), aufweisend ein erstes Haftmittel (12), ein zweites Haftmittel (14), eine Sensoranordnung (16) sowie eine Steuerung (44), wobei das Verbindungssystem (10) zur Durchführung eines Verfahrens (100) nach einem der Ansprüche 1-4 eingerichtet ist.

9. Verbindungssystem (10) nach Anspruch 8, wobei das Verbindungssystem (10) eine Speichereinrichtung (42) aufweist, wobei das Verbindungssystem (10) zur Durchführung des Verfahrens (100) nach Anspruch 5 eingerichtet ist und/oder
das Verbindungssystem (10) eine Datenverarbeitungseinrichtung (20) aufweist, wobei das Verbindungssystem (10) zur Durchführung des Verfahrens (100) nach Anspruch 6 eingerichtet ist.

10. Verbindungssystem (10) nach einem der Ansprüche 8 oder 9, wobei die Sensoranordnung (16) an oder in dem ersten Haftmittel (12) und/oder an oder in dem zweiten Haftmittel (14) angeordnet oder ausgebildet ist.

11. Verbindungssystem (10) nach einem der Ansprüche 8-10, wobei
a) das erste Haftmittel (12) und/oder das zweite Haftmittel (14) Teil eines Haftverschlusses (26) ist/sind, wobei der Haftverschluss (26) Haken (47), Pilzköpfe (31, 33), palmenförmige Haftelemente (45), Fasern (61) und/oder Schlaufen (36) eines Flauschbandes (35) oder eines Veloursbandes oder eines Gewebes oder eines Vliesstoffes (59), und/oder Hälften von einem Druckknopf (51) aufweist;
b) das erste Haftmittel (12) oder das zweite Haftmittel (14) Mikrostrukturen (13) zur Nutzbarmachung intermolekularer Kräfte zum Zweck der Adhäsion an glatten Oberflächen aufweist/aufweisen; und/oder
c) das erste Haftmittel (12) und/oder das zweite Haftmittel (14) eine Klebstoffschicht (49) aufweist/aufweisen.

12. Verbindungssystem (10) nach einem der Ansprüche 8-11, wobei das Verbindungssystem (10) zumindest eine Kommunikationskomponente (18) aufweist, wobei das Verbindungssystem (10) zur Durchführung des Verfahrens (100) nach Anspruch 7 eingerichtet ist.

13. Verbindungssystem (10) nach Anspruch 12, wobei die zumindest eine Kommunikationskomponente (18) an oder in dem ersten Haftmittel (12) und/oder an oder in dem zweiten Haftmittel (14) angeordnet oder ausgebildet ist.

14. Verbindungssystem (10) nach einem der Ansprüche 12 oder 13, wobei die zumindest eine Kommunikationskomponente (18) ein passives Element ist, welches keine eigene Energieversorgung aufweist, wobei das drahtlose Versenden der Daten der Sensoranordnung (16) mithilfe eines Lesegeräts ausgelöst werden kann.

15. Set (1), aufweisend ein Verbindungssystem (10) nach einem der Ansprüche 8-14 und ein Funktionselement, insbesondere einen Mobilfunkrouter (11), wobei das Funktionselement an einem ersten oder einem zweiten Haftmittel (12, 14) des Verbindungssystems (10) angeordnet ist.

16. Verfahren (200) zur Herstellung eines Verbindungssystems (10), aufweisend folgende Schritte:
I. Integration einer Sensoranordnung (16) in ein erstes Haftmittel (12) und/oder in ein zweites Haftmittel (14), oder an einem ersten Haftmittel (12) und/oder an einem zweiten Haftmittel (14), durch Einweben, oder Einbetten, insbesondere Einbetten in eine Kavität (24), oder flächiges Verkleben, wobei das Verbindungssystem (10) nach einem der Ansprüche 8-14 ausgebildet ist; und/oder
II. Integration einer Kommunikationskomponente (18) in das erste Haftmittel (12) und/oder in das zweite Haftmittel (14), oder an dem ersten Haftmittel (12) und/oder an dem zweiten Haftmittel (14), durch Einweben, oder Einbetten, insbesondere Einbetten in eine Kavität (24), oder flächiges Verkleben, oder Aufdrucken, oder Aufdampfen, wobei das Verbindungssystem (10) nach einem der Ansprüche 12-14 ausgebildet ist.

## Geänderte Patentansprüche

### Geänderte Patentansprüche gemäss Regel 137(2) EPÜ.

1. Verfahren (100) zur Zustandserfassung eines Verbindungssystems (10), wobei das Verbindungssystem (10) ein erstes Haftmittel (12) und ein zweites Haftmittel (14) aufweist, zwischen welchen eine Haftverbindung hergestellt wird, und wobei das Verbindungssystem (10) eine Sensoranordnung (16) aufweist,
wobei das Verfahren (100) folgende Schritte aufweist:
A) Annähern und/oder Anbringen des ersten Haftmittels (12) an das/dem zweite(n) Haftmittel (14);
B) Erfassen zumindest eines Parameters durch die Sensoranordnung (16) betreffend einen Zustand der Haftverbindung;
D) Anbringen des ersten Haftmittels (12) an dem zweiten Haftmittel (14), falls dies nicht bereits unter Schritt A) erfolgt ist
E) Ausgabe des Zustands der Haftverbindung.

2. Verfahren (100) nach Anspruch 1, wobei die Sensoranordnung (16) ein Sensorelement (15, 27, 41, 53, 63) zur Erfassung einer Verschiebung, einer Dehnung, einer Kraft, eines Drucks, einer Strahlungsenergie, einer Stoffmengenkonzentration oder einer Magnetfeldstärke zwischen dem ersten Haftmittel (12) und dem zweiten Haftmittel (14) aufweist.

3. Verfahren (100) nach Anspruch 1 oder Anspruch 2,
wobei die Sensoranordnung (16) zumindest eines der folgenden Sensorelemente (15, 27, 41, 53, 63) aufweist;
a) ein optisches Sensorelement (15);
b) einen Magnetsensor (27);
c) einen Drucksensor (41);
d) einen Kraftsensor (53);
e) einen Dehnungssensor (63);
mit welchem Sensorelement (15, 27, 41, 53, 63) der zumindest eine Parameter erfasst wird; und/oder
wobei der zumindest eine Parameter
i. die Positionierung des ersten Haftmittels (12);
ii. die Anhaftung des ersten Haftmittels (12); und/oder
iii. die Belastung der Haftverbindung, einschließlich deren Nicht-Belastung
betrifft.

4. Verfahren (100) nach einem der vorhergehenden Ansprüche, wobei die Sensoranordnung (16) zwei oder mehr, gleichartige oder unterschiedliche Sensorelemente (15, 27, 41, 53, 63) aufweist, mit welchen Sensorelementen (15, 27, 41, 53, 63) der zumindest eine Parameter erfasst wird.

5. Verfahren (100) nach einem der vorhergehenden Ansprüche, wobei die Daten der Sensoranordnung (16) vollständig oder teilweise in einer Speichereinrichtung (42) des Verbindungssystems (10) zumindest zeitweise gespeichert werden.

6. Verfahren (100) nach einem der vorhergehenden Ansprüche, wobei das Verbindungssystem (10) eine Datenverarbeitungseinrichtung (20) aufweist, in welcher die Daten der Sensoranordnung (16) verarbeitet werden.

7. Verfahren (100) nach einem der vorhergehenden Ansprüche, wobei das Verbindungssystem (10) eine Kommunikationskomponente (18) aufweist, wobei das Verfahren (100) zusätzlich einen Schritt C), wie folgt, aufweist:
C) Drahtloses Versenden von verarbeiteten oder unverarbeiteten Daten der Sensoranordnung (16) mittels der Kommunikationskomponente (18).

8. Verbindungssystem (10), aufweisend ein erstes Haftmittel (12), ein zweites Haftmittel (14), eine Sensoranordnung (16) sowie eine Steuerung (44), wobei das Verbindungssystem (10) zur Durchführung eines Verfahrens (100) nach einem der Ansprüche 1-4 eingerichtet ist.

9. Verbindungssystem (10) nach Anspruch 8, wobei das Verbindungssystem (10) eine Speichereinrichtung (42) aufweist, wobei das Verbindungssystem (10) zur Durchführung des Verfahrens (100) nach Anspruch 5 eingerichtet ist und/oder
das Verbindungssystem (10) eine Datenverarbeitungseinrichtung (20) aufweist, wobei das Verbindungssystem (10) zur Durchführung des Verfahrens (100) nach Anspruch 6 eingerichtet ist.

10. Verbindungssystem (10) nach einem der Ansprüche 8 oder 9, wobei die Sensoranordnung (16) an oder in dem ersten Haftmittel (12) und/oder an oder in dem zweiten Haftmittel (14) angeordnet oder ausgebildet ist.

11. Verbindungssystem (10) nach einem der Ansprüche 8-10, wobei
a) das erste Haftmittel (12) und/oder das zweite Haftmittel (14) Teil eines Haftverschlusses (26) ist/sind, wobei der Haftverschluss (26) Haken (47), Pilzköpfe (31, 33), palmenförmige Haftelemente (45), Fasern (61) und/oder Schlaufen (36) eines Flauschbandes (35) oder eines Veloursbandes oder eines Gewebes oder eines Vliesstoffes (59), und/oder Hälften von einem Druckknopf (51) aufweist;
b) das erste Haftmittel (12) oder das zweite Haftmittel (14) Mikrostrukturen (13) zur Nutzbarmachung intermolekularer Kräfte zum Zweck der Adhäsion an glatten Oberflächen aufweist/aufweisen; und/oder
c) das erste Haftmittel (12) und/oder das zweite Haftmittel (14) eine Klebstoffschicht (49) aufweist/aufweisen.

12. Verbindungssystem (10) nach einem der Ansprüche 8-11, wobei das Verbindungssystem (10) zumindest eine Kommunikationskomponente (18) aufweist, wobei das Verbindungssystem (10) zur Durchführung des Verfahrens (100) nach Anspruch 7 eingerichtet ist.

13. Verbindungssystem (10) nach Anspruch 12, wobei die zumindest eine Kommunikationskomponente (18) an oder in dem ersten Haftmittel (12) und/oder an oder in dem zweiten Haftmittel (14) angeordnet oder ausgebildet ist.

14. Verbindungssystem (10) nach einem der Ansprüche 12 oder 13, wobei die zumindest eine Kommunikationskomponente (18) ein passives Element ist, welches keine eigene Energieversorgung aufweist, wobei das drahtlose Versenden der Daten der Sensoranordnung (16) mithilfe eines Lesegeräts ausgelöst werden kann.

15. Set (1), aufweisend ein Verbindungssystem (10) nach einem der Ansprüche 8-14 und ein Funktionselement, insbesondere einen Mobilfunkrouter (11), wobei das Funktionselement an einem ersten oder einem zweiten Haftmittel (12, 14) des Verbindungssystems (10) angeordnet ist.

16. Verfahren (200) zur Herstellung eines Verbindungssystems (10), aufweisend folgende Schritte:
I. Integration einer Sensoranordnung (16) in ein erstes Haftmittel (12) und/oder in ein zweites Haftmittel (14), oder an einem ersten Haftmittel (12) und/oder an einem zweiten Haftmittel (14), durch Einweben, oder Einbetten, insbesondere Einbetten in eine Kavität (24), oder flächiges Verkleben, wobei das Verbindungssystem (10) nach einem der Ansprüche 8-14 ausgebildet ist; und/oder
II. Integration einer Kommunikationskomponente (18) in das erste Haftmittel (12) und/oder in das zweite Haftmittel (14), oder an dem ersten Haftmittel (12) und/oder an dem zweiten Haftmittel (14), durch Einweben, oder Einbetten, insbesondere Einbetten in eine Kavität (24), oder flächiges Verkleben, oder Aufdrucken, oder Aufdampfen, wobei das Verbindungssystem (10) nach einem der Ansprüche 12-14 ausgebildet ist.
